# EUROPEAN PATENT APPLICATION

(11) **EP 4 557 471 A1**
(43) Date of publication of application: **21.05.2025**
(21) Application number: 22952532.4
(22) Date of filing: 29.07.2022
(51) Int. Cl.: H01M 50/166, H01M 50/188, H01M 50/204, H01M 50/547

(54) **END COVER ASSEMBLY, BATTERY ASSEMBLY, BATTERY, AND ELECTRIC APPARATUS**

(71) Applicant: Contemporary Amperex Technology Co., Limited, Ningde, Fujian 352100 (CN)
(72) Inventor: HUANG, Shoujun, Ningde, Fujian 352100 (CN); CHEN, Xinxiang, Ningde, Fujian 352100 (CN); LIN, Denghua, Ningde, Fujian 352100 (CN); YANG, Youping, Ningde, Fujian 352100 (CN)
(74) Representative: Gong, Jinping
(86) International application number: PCT/CN2022/109154
(87) International publication number: WO 2024/021085

(57) **Abstract**

Embodiments of the present application provide an end cover assembly, a battery pack, a battery, and an electrical device, and belong to the technical field of batteries. The end cover assembly includes a first end cover, a second end cover, an electrode terminal, and an acquisition member. The first end cover is configured to close an opening of a first case. The second end cover is configured to close an opening of a second case. The electrode terminal includes a terminal body that passes through the first end cover and the second end cover. The acquisition member includes a main body portion and a connecting portion. In a first direction, the main body portion is stacked between the first end cover and the second end cover; the connecting portion is connected to the main body portion and extends from the main body portion in the first direction; and the connecting portion is connected to the terminal body to achieve electrical connection between the acquisition member and the electrode terminal. The connecting portion of the acquisition member extends from the main body portion in a stacking direction of the first end cover and the second end cover, and the connecting portion is connected to the terminal body of the electrode terminal, to achieve stable electrical connection between the acquisition member and the electrode terminal. The end cover assembly has a simple structure and perfect economy.

## Description

### TECHNICAL FIELD

The present application relates to the technical field of batteries, and in particular, to an end cover assembly, a battery pack, a battery, and an electrical device.

### BACKGROUND

With the development of a new energy technology, batteries are widely used, such as a mobile phone, a notebook, a battery vehicle, an electric vehicle, an electric plane, an electric ship, an electric toy car, an electric toy ship, an electric toy plane, and an electric tool.

In a battery technology, to monitor a working condition of a battery cell, an acquisition member needs to be arranged in an end cover assembly. The acquisition member is connected to an electrode terminal, to acquire signals such as voltage and current of the battery cell through the acquisition member. At present, how to ensure stable electrical connection between the acquisition member and the electrode terminal is a technical problem that needs to be solved urgently in the battery technology.

### SUMMARY

Embodiments of the present application provide an end cover assembly, a battery pack, a battery, and an electrical device, which can achieve stable electrical connection between an acquisition member and an electrode terminal.

In a first aspect, the embodiments of the present application provide an end cover assembly, including: a first end cover, a second end cover, an electrode terminal, and an acquisition member. The first end cover is configured to close an opening of a first case; the second end cover is configured to close an opening of a second case; the electrode terminal includes a terminal body that passes through the first end cover and the second end cover; and the acquisition member includes a main body portion and a connecting portion. In a first direction, the main body portion is stacked between the first end cover and the second end cover; the connecting portion is connected to the main body portion and extends from the main body portion in the first direction; and the connecting portion is connected to the terminal body to achieve electrical connection between the acquisition member and the electrode terminal.

In the above technical solution, the main body portion of the acquisition member is stacked between the first end cover and the second end cover, and the connecting portion of the acquisition member extends from the main body portion in a stacking direction of the first end cover and the second end cover. The connecting portion is connected to the terminal body of the electrode terminal, to achieve stable electrical connection between the acquisition member and the electrode terminal. The end cover assembly has a simple structure and perfect economy.

In some embodiments, the acquisition member is provided with a mounting hole; the mounting hole penetrates through the main body portion and the connecting portion in the first direction; the terminal body is arranged in the mounting hole in a penetrating manner; and a hole wall surface of the mounting hole is connected to an outer peripheral surface of the terminal body. In this way, both the main body portion and the connecting portion are connected to the terminal body, which enlarges a connection area between the acquisition member and the electrode terminal. On the one hand, the stability of electrical connection between the acquisition member and the electrode terminal is further improved. On the other hand, a current flowing area between the connecting portion and the terminal body can be enlarged, and a current flowing resistance can be reduced.

In some embodiments, the first end cover is provided with a first lead-out hole, and the terminal body is inserted into the first lead-out hole; and in the first direction, the connecting portion at least partially extends into the first lead-out hole. In this way, an internal space of the first lead-out hole is fully used, and a space, occupied by the connecting portion, between the first end cover and the second end cover is reduced, so that the overall structure of the end cover assembly is more compact. In addition, the acquisition member is connected to the terminal body through the connecting portion, and the connecting portion at least partially extends into the first lead-out hole, so that the main body portion can be made thinner; a distance between the first end cover and the second end cover can be shortened; a size of the end cover assembly in the stacking direction of the first end cover and the second end cover can be reduced; and it is beneficial to increasing an energy density of a battery.

In some embodiments, the end cover assembly further includes a first insulating member; the first insulating member includes a first insulating portion and a second insulating portion; in the first direction, the first insulating portion is at least partially arranged between the first end cover and the main body portion, to insulate and isolate the main body portion from the first end cover; and the second insulating portion is connected to the first insulating portion and at least partially extends into the first lead-out hole in the first direction, to insulate and isolate the connecting portion from the first end cover. The main body portion and the first end cover can be insulated by the first insulating portion, and the connecting portion and the first end cover can be insulated by the second insulating portion. In addition, since both the connecting portion and the second insulating portion extend into the first lead-out hole, the first end cover plays a lateral supporting role for the connecting portion through the second insulating portion, thereby lowering a risk of lateral deformation of the connecting portion.

In some embodiments, the end cover assembly further includes a first sealing member; the first sealing member is configured to seal the electrode terminal and the first end cover; and in the first direction, one end of the second insulating portion facing away from the first insulating portion abuts against the first sealing member. A gap between the second insulating portion and the first sealing member is eliminated, thereby lower a risk of overlapping between the connecting portion and the first end cover due to the gap between the second insulating portion and the first sealing member.

In some embodiments, in the first direction, one end of the connecting portion facing away from the main body portion abuts against the first sealing member. In this way, the risk of overlapping between the connecting portion and the first end cover can be further reduced.

In some embodiments, the electrode terminal further includes a first position-limiting portion, and the first position-limiting portion is connected to the terminal body; the first sealing member includes a first sealing portion and a second sealing portion; the second sealing portion is connected to the first sealing portion; in the first direction, the first sealing portion at least partially extends into the first lead-out hole; the end of the second insulating portion facing away from the first insulating portion and the end of the connecting portion facing away from the main body portion both abut against the first sealing portion; the first position-limiting portion is located on one side of the first end cover facing away from the second end cover; and the second sealing portion is at least partially arranged between the first end cover and the first position-limiting portion. The first position-limiting portion and the first end cover are sealed by the second sealing portion, and the first sealing portion extends into the first lead-out hole to abut against the first insulating portion and the connecting portion, to lower the risk of overlapping between the connecting portion and the first end cover. In addition, the first sealing portion can extend into the first lead-out hole to achieve positioning, and rapid mounting of the first sealing member can be achieved.

In some embodiments, in the first direction, the first sealing member has a first face facing the main body portion, and the end of the second insulating portion facing away from the first insulating portion and the end of the connecting portion facing away from the main body portion both abut against the first face. The second insulating portion and the connecting portion abut against the same surface of the first sealing member, which can simplify the structure of the first sealing member.

In some embodiments, in the first direction, the first sealing member has a first face facing the main body portion and a second face facing the main body portion; the end of the second insulating portion facing away from the first insulating portion abuts against the first face; and the end of the connecting portion facing away from the main body portion abuts against the second face; wherein the first face is closer to the second end cover than the second face; or the second face is closer to the second end cover than the first face. In this way, abutting positions of the second insulating portion and the first face and abutting positions of the connecting portion and the second surface are misaligned, which can prevent burrs on the connecting portion from overlapping the first end cover and lower a risk of short circuit.

In some embodiments, the first end cover includes a first region and a second region; the second region is arranged around the first region; in the first direction, the thickness of the second region is less than the thickness of the first region; and the first lead-out hole is provided in the first region. The first lead-out hole is arranged in the first region with a larger thickness, so that a depth of the first lead-out hole is ensured, to accommodate more parts of the connecting portion. The thickness of the second region is less than the thickness of the first region. The second region is a thinned region of the first end cover, which reduces a weight of the first end cover and can effectively reduce the production costs.

In some embodiments, in the first direction, the second region has a first surface facing the second end cover, and the first region partially protrudes from the first surface in a direction facing the second end cover. In this way, a lateral supporting area of the first region for the connecting portion is enlarged, thereby lowering the risk of lateral deformation of the connecting portion.

In some embodiments, the first region includes a first protrusion protruding from the first surface in the direction facing the second end cover; the end cover assembly further includes a first insulating member; in the first direction, the first insulating member is at least partially arranged between the first end cover and the main body portion, to insulate and isolate the main body portion from the first end cover; and wherein the first insulating member is provided with a first avoidance portion for avoiding the first protrusion. The first end cover and the acquisition member can be insulated by the first insulating member, and the first avoidance portion on the first insulating member can avoid the first protrusion, so that the first insulating member can tightly abut against the second region, making the overall structure of the end cover assembly more compact.

In some embodiments, in the first direction, the second region has a second surface facing away from the second end cover, and the first region partially protrudes from the second surface in a direction facing away from the second end cover.

In some embodiments, the first region includes a second protrusion protruding from the second surface in the direction facing away from the second end cover; the end cover assembly further includes a second insulating member; the electrode terminal further includes a first position-limiting portion; the first position-limiting portion is connected to the terminal body; in the first direction, the first position-limiting portion is located on the side of the first end cover facing away from the second end cover; the second insulating member is at least partially arranged between the first end cover and the first position-limiting portion, to insulate and isolate the first end cover from the first position-limiting portion; and wherein the second insulating member is provided with a second avoidance portion for avoiding the second protrusion. The first end cover and the first position-limiting portion can be insulated by the second insulating member, and the second avoidance portion on the second insulating member can avoid the second protrusion, so that the second insulating member can tightly abut against the second region, making the overall structure of the end cover assembly more compact.

In some embodiments, the end cover assembly further includes a first insulating member; in the first direction, the first insulating member is at least partially arranged between the first end cover and the second end cover, to insulate and isolate the first end cover from the second end cover; and wherein the acquisition member is embedded into the first insulating member. The first end cover and the second end cover can be insulated by the first insulating member, and the acquisition member is embedded in the first insulating member. On the one hand, the first insulating member can protect the acquisition member and achieve insulation between the acquisition member and the first end cover, as well as between the acquisition member and the second end cover. On the other hand, a distance between the first end cover and the second end cover can be shortened, making the overall structure of the end cover assembly more compact.

In some embodiments, the electrode terminal further includes a first position-limiting portion and a second position-limiting portion. The first position-limiting portion and the second position-limiting portion are both connected to the terminal body; in the first direction, the first position-limiting portion is located on the side of the first end cover facing away from the second end cover, and the second position-limiting portion is located on one side of the second end cover facing away from the first end cover; and the first position-limiting portion and the second position-limiting portion are configured to cooperate to limit the first end cover and the second end cover. The first end cover and the second end cover are limited between the first position-limiting portion and the second position-limiting portion, so that the electrode terminal is mounted with the first end cover and the second end cover, and the electrode terminal, the first end cover, and the second end cover have a better integrity.

In some embodiments, the end cover assembly further includes a second insulating member; in the first direction, the second insulating member is at least partially arranged between the first end cover and the first position-limiting portion, to insulate and isolate the first end cover from the first position-limiting portion. The first end cover and the first position-limiting portion can be insulated by the second insulating member.

In some embodiments, the end cover further includes a third insulating member; and in the first direction, the third insulating portion is at least partially arranged between the second end cover and the second position-limiting portion, to insulate and isolate the second end cover from the second position-limiting portion. The second end cover and the second position-limiting portion can be insulated by the third insulating member.

In some embodiments, the thickness of the main body portion is D, satisfying: 0.1 mm ≤ D ≤ 1.5 mm. The thickness of the main body portion is set within a reasonable range, so that the overall thickness of the connecting portion is reduced, which shortens the distance between the first end cover and the second end cover, and makes the overall structure of the end cover assembly more compact.

In some embodiments, the connecting portion and the main body portion are integrally formed. In this way, it ensures the connection strength of the connecting portion and the main body portion, and stable current flowing between the connecting portion and the main body portion is achieved.

In a second aspect, the embodiments of the present application provide a battery pack, including a first case, a second case, and the above end cover assembly provided in any one of the embodiments of the first aspect. The first case is configured to accommodate a first electrode assembly; the second case is configured to accommodate a second electrode assembly; the first end cover closes an opening of the first case, the second end cover closes an opening of the second case; and the electrode terminal is configured to achieve electrical connection between the first electrode assembly and the second electrode assembly.

In a third aspect, the embodiments of the present application provide a battery, including the above battery pack provided in any one of the embodiments in the second aspect.

In a fourth aspect, the embodiments of the present application provide an electrical device, including the above battery provided in any one of the embodiments in the third aspect.

### BRIEF DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
Fig. 1 is a schematic structural diagram of a vehicle according to some embodiments of the present application;
Fig. 2 is an exploded diagram of a battery according to some embodiments of the present application;
Fig. 3 is a schematic structural diagram of a battery pack according to an embodiment of the present application;
Fig. 4 is a schematic structural diagram of an end cover assembly according to some embodiments of the present application;
Fig. 5 is a schematic structural diagram of an acquisition member shown in Fig. 4;
Fig. 6 is a partially enlarged view of part A of the end cover assembly shown in Fig. 4;
Fig. 7 is a schematic structural diagram of a first sealing member shown in Fig. 6;
Fig. 8 is a partially enlarged view of an end cover assembly according to some other embodiments of the present application;
Fig. 9 is a schematic structural diagram of a first sealing member shown in Fig. 8;
Fig. 10 is a partially enlarged view of an end cover assembly according to still some embodiments of the present application;
Fig. 11 is a schematic structural diagram of a first sealing member shown in Fig. 10;
Fig. 12 is a partially enlarged view of an end cover assembly according to yet still some embodiments of the present application;
Fig. 13 is a schematic structural diagram of a first end cover shown in Fig. 12;
Fig. 14 is a partially enlarged view of an end cover assembly according to other embodiments of the present application;
Fig. 15 is a schematic structural diagram of a first end cover shown in Fig. 14; and
Fig. 16 is a partially enlarged view of part B of the acquisition member shown in Fig. 5.

Numerals: 1-first case; 2-second case; 3-first electrode assembly; 4-second electrode assembly; 5-end cover assembly; 51-first end cover; 511-first lead-out hole; 512-first region; 5121-first protrusion; 5122-second protrusion; 513-second region; 5131-first surface; 5132-second surface; 52-second end cover; 521-second lead-out hole; 53-electrode terminal; 531-terminal body; 5311-first section; 5312-second section; 5313-composite interface; 532-first position-limiting portion; 533-second position-limiting portion; 54-acquisition member; 541-main body portion; 5411-third surface; 5412-fourth surface; 542-connecting portion; 5421-first end surface; 543-mounting hole; 55-first insulating member; 551-first insulating portion; 552-second insulating portion; 553-first avoidance portion; 56-second insulating member; 561-second avoidance portion; 57-third insulating member; 58-first sealing member; 581-first sealing portion; 582-second sealing portion; 583-first face; 584-second face; 585-cylindrical surface; 59-second sealing member; 10-battery pack; 10a-battery cell; 20-box; 201-first part; 202-second part; 100-battery; 200-controller; 300-motor; 1000-vehicle; and Z-first direction.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application have the same meaning as commonly understood by those skilled in the art of the present application. The terms used in this specification in the present application are intended only for the purpose of describing specific embodiments and are not intended to limit the present application. The terms "include" and "has/have", as well as any variations thereof, in the specification and claims of the present application, as well as the accompanying drawings, are intended to encompass non-exclusive inclusion. The terms "first", "second", etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the phrase "a plurality of" means two or more.

In the present application, the battery cell may include a lithium-ion secondary battery, a lithium-ion primary battery, a lithium sulfur battery, a sodium lithium-ion battery, a sodium-ion battery or a magnesium-ion battery and so on. This is not limited in the embodiments of the present application. The battery cell may be in a cylindrical shape, a flat shape, a cuboid shape or another shape, which is also not limited in the embodiments of the present application. The battery cells are generally classified into three types depending on the way of package: cylindrical battery cells, prismatic battery cells and pouch battery cells, which are also not limited in the embodiments of the present application.

The battery mentioned in the embodiments of the present application refers to a single physical module including one or more battery cells to provide a higher voltage and capacity. For example, the battery mentioned in the present application may include a battery module or a battery pack, etc. The battery generally includes a box for packaging one or more battery cells. The box can prevent liquid or other foreign matters from affecting charging or discharging of the battery cells.

The battery cell includes an electrode assembly and an electrolytic solution, and the electrode assembly is composed of a positive electrode plate, a negative electrode plate and a separator. The operation of the battery cell mainly relies on the movement of metal ions between the positive electrode plate and the negative electrode plate. The positive electrode plate includes a positive electrode current collector and a positive electrode active material layer, a surface of the positive electrode current collector is coated with the positive electrode active material layer, the positive electrode current collector not coated with the positive electrode active material layer protrudes from the positive electrode current collector already coated with the positive electrode active material layer, and the positive electrode current collector not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer, a surface of the negative electrode current collector is coated with the negative electrode active material layer, the negative electrode current collector not coated with the negative electrode active material layer protrudes from the negative electrode current collector already coated with the negative electrode active material layer, and the negative electrode current collector not coated with the negative electrode active material layer is used as a negative tab. The negative electrode current collector may be of a material of copper, and the negative electrode active material may be carbon, silicon, etc. In order to ensure that no fusing occurs when a large current passes, there are a plurality of positive tabs which are stacked together, and there are a plurality of negative tabs which are stacked together. The separator may be of a material such as polypropylene (PP) or polyethylene (PE). In addition, the electrode assembly may be of a wound structure or a stacked structure. The embodiments of the present application do not impose a limitation on this.

In a battery, to meet a high-current or high-voltage demand, a plurality of battery cells in a box need to be connected in series, in parallel, or in parallel-series connection. At present, a busbar component is connected to the electrode terminals of two battery cells to achieve electrical connection between the two battery cells. The busbar component may occupy a part of an internal space of the box. The utilization rate of the internal space in the box is low, which reduces an energy density of the battery.

To increase the utilization rate of the internal space of the box and increase the energy density of the battery, the two battery cells can share one end cover assembly. The end cover assembly include an electrode terminal and two end covers. The electrode terminal is mounted on the two end covers. One end cover is configured to close an opening of a case of one battery cell, and the other end cover is configured to close an opening of a case of the other battery cell. The electrode assemblies of the two battery cells are both connected to the electrode terminal to achieve electrical connection between the two battery cells. To monitor a working condition of a battery cell, an acquisition member needs to be arranged in an end cover assembly. The acquisition member is connected to the electrode terminal, to acquire signals such as voltage and current of the battery cells through the acquisition member.

The inventor has noticed that in the related art, the acquisition member is of a sheet-like structure. An end portion of the acquisition member in a lengthwise direction abuts against the electrode terminal to achieve the acquisition member and the electrode terminal. The stability of the electrical connection between the acquisition member and the electrode terminal is poor, and a failure of acquiring information of the battery cells through the acquisition member may easily occur.

In view of this, an embodiment of the present application provides an end cover assembly, wherein a connecting portion is provided on a main body portion stacked between a first end cover and a second end cover in a collecting member, the connecting portion extends from the main body portion along a stacking direction of the first end cover and the second end cover, and the connecting portion is connected to a terminal body of the electrode terminal.

In such an end cover assembly, the main body portion of the acquisition member is stacked between the first end cover and the second end cover, and the connecting portion of the acquisition member extends from the main body portion in a stacking direction of the first end cover and the second end cover. The connecting portion is connected to the terminal body of the electrode terminal, to achieve stable electrical connection between the acquisition member and the electrode terminal. The end cover assembly has a simple structure and perfect economy.

The technical solutions described in the embodiments of the present application are applicable to batteries and electrical devices using batteries.

The electrical device may be a vehicle, a mobile phone, a portable device, a laptop, a ship, a spacecraft, an electric toy, an electric tool, etc. The vehicle may be a fuel vehicle, a gas vehicle or a new energy vehicle. The new energy vehicle may be an all-electric vehicle, a hybrid electric vehicle, an extended-range vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in the embodiments of the present application.

For ease of description, in the following embodiments, the electrical device is, for example, a vehicle.

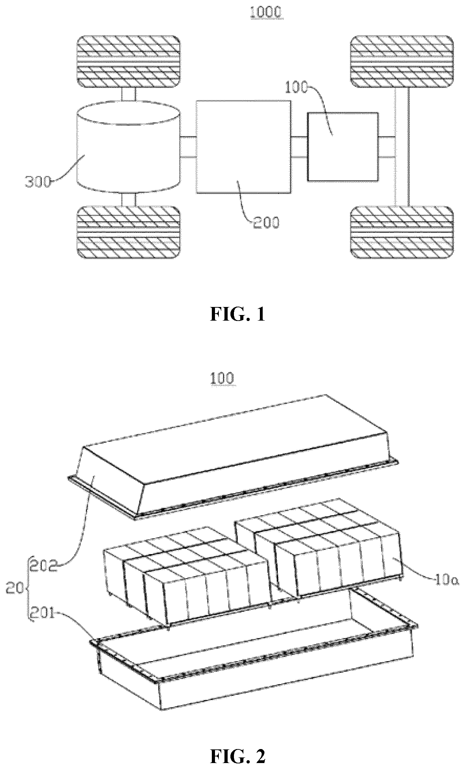

Referring to Fig. 1, Fig. 1 is a schematic structural diagram of a vehicle 1000 according to some embodiments of the present application. The interior of the vehicle 1000 is provided with a battery 100, and the battery 100 may be provided at the bottom or head or tail of the vehicle 1000. The battery 100 may be used as a power supply for the vehicle 1000, for example, the battery 100 may be used as an operating power source for the vehicle 1000.

The vehicle 1000 may further include a controller 200 and a motor 300. The controller 200 is used to control the battery 100 to supply power to the motor 300, for example, for the operating power demand when the vehicle 1000 is starting, navigating and driving.

In some examples of the present application, the battery 100 not only can serve as an operating power source of the vehicle 1000, but also can serve as a driving power source of the vehicle 1000, to provide a driving power for the vehicle 1000 in place of or partially in place of fuel or natural gas.

Refer to Fig. 2, Fig. 2 is an exploded diagram of a battery 100 according to some embodiments of the present application. The battery 100 includes a battery cell 10a and a box 20. The box 20 is configured to accommodate the battery cell 10a.

The box 20 is a component for accommodating the battery cell 10a, and the box 20 provides an accommodating space for the battery cell 10a. The box 20 may be of various structures. In some embodiments, the box 20 may include a first part 201 and a second part 202. The first part 201 and the second part 202 are covered by each other to define the accommodating space for accommodating the battery cell 10a. The first part 201 and the second part 202 may be of a variety of shapes, such as a cuboid, a cylinder, or the like. The first part 201 may be of a hollow structure with one side open, the second part 202 may also be of a hollow structure with one side open, and the open side of the second part 202 covers the open side of the first part 201, so as to form the box 20 having the accommodating space. It is also possible that the first part 201 may be of a hollow structure with one side open, the second part 202 may be a plate-like structure, and the second part 202 covers the open side of the first part 201, so as to form the box 20 having the accommodating space. The first part 201 and the second part 202 may be sealed by a sealing element, and the sealing element may be a sealing ring, a sealant, and the like.

In the battery 100, there may be a plurality of battery cells 10a. The plurality of battery cells 10a may be connected in series or parallel or in parallel-series connection. The parallel-series connection means that the plurality of battery cells 10a are connected in both series and parallel.

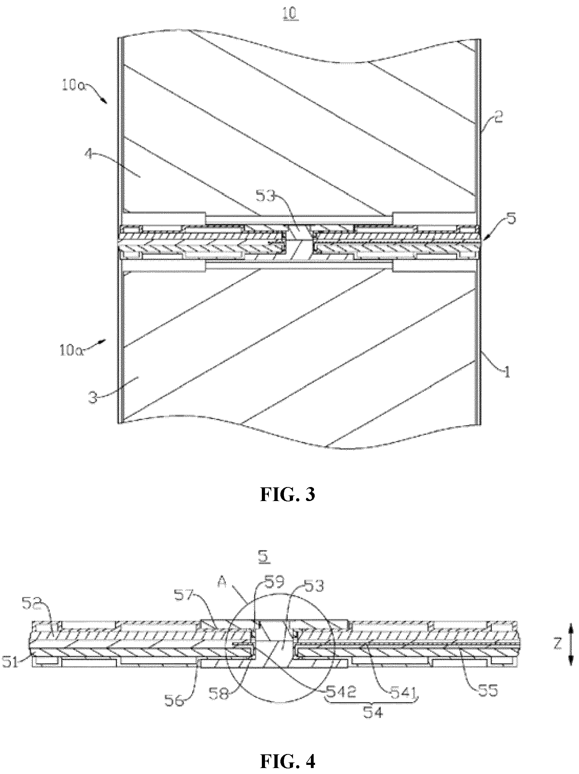

Referring to Fig. 3, Fig. 3 is a schematic structural diagram of a battery pack 10 according to an embodiment of the present application. Two battery cells 10a are electrically connected to form the battery pack 10. For example, the two battery cells 10a are connected in series to form the battery pack 10.

The battery pack 10 may include a first case 1, a second case 2, a first electrode assembly 3, a second electrode assembly 4, and an end cover assembly 5.

The first case 1, the first electrode assembly 3, and the end cover assembly 5 may form one battery cell 10a, and the second case 2, the second electrode assembly 4, and the end cover assembly 5 may form the other battery cell 10a. It can be understood that, in the battery pack 10, the two battery cells 10 share one end cover assembly 5.

The first case 1 is a component for accommodating the first electrode assembly 3, and the second case 2 is a component for accommodating the second electrode assembly 4. The first case 1 and the second case 2 may be in various shapes, such as a cylindrical shape and a cuboid shape.

In the battery pack 10, the first electrode assembly 3 is a component for undergoing an electrochemical reaction in one battery cell 10a, and the second electrode assembly 4 is a component for undergoing an electrochemical reaction in the other battery cell 10a. The first electrode assembly 3 and the second electrode assembly 4 may be wound electrode assemblies, or may be stacked electrode assemblies.

The end cover assembly 5 is a component that covers an opening of the first case 1 and an opening of the second case 2, to isolate internal environments of the two battery cells 10a from an external environment. The end cover assembly 5 has an electrode terminal 53, and the first electrode assembly 3 and the second electrode assembly 4 are electrically connected through the electrode terminal 53. The first electrode assembly 3 and the second electrode assembly 4 each have a positive tab and a negative tab. If the positive tab of the first electrode assembly 3 is connected to the negative tab of the second electrode assembly 4 through the electrode terminal 53, the two battery cells 10a are connected in series.

The specific structure of the end cover assembly 5 will be described in detail below in conjunction with the accompanying drawings.

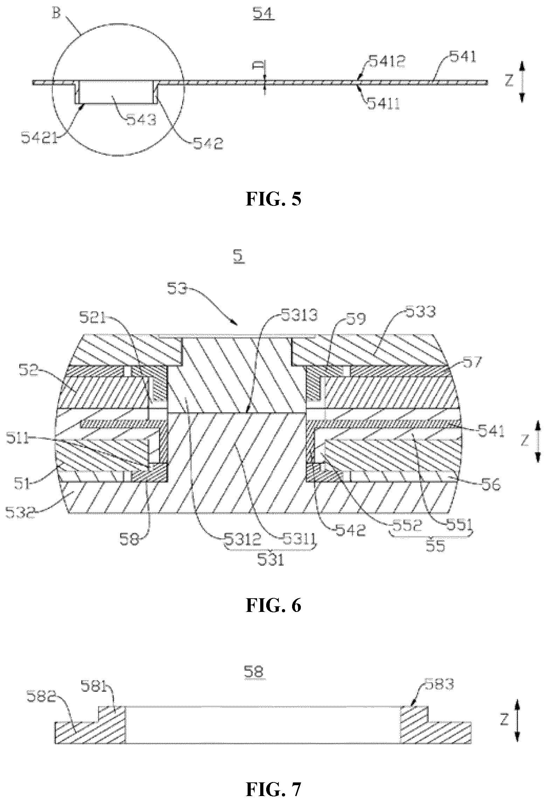

Referring to Fig. 4 and Fig. 5, Fig. 4 is a schematic structural diagram of an end cover assembly 5 according to some embodiments of the present application, and Fig. 5 is a schematic structural diagram of an acquisition member 54 shown in Fig. 4. The embodiments of the present application provide an end cover assembly 5, including a first end cover 51, a second end cover 52, an electrode terminal 53, and an acquisition member 54. The first end cover 51 is configured to close an opening of a first case 1. The second end cover 52 is configured to close an opening of a second case 2. The electrode terminal 53 includes a terminal body 531 that passes through the first end cover 51 and the second end cover 52. The acquisition member 54 includes a main body portion 541 and a connecting portion 542. In a first direction Z, the main body portion 541 is stacked between the first end cover 51 and the second end cover 52. The connecting portion 542 is connected to the main body portion 541 and extends from the main body portion 541 in the first direction Z. The connecting portion 542 is connected to the terminal body 531 to achieve electrical connection between the acquisition member 54 and the electrode terminal 53.

The first end cover 51 is a composed that covers the opening of the first case 1, to isolate an internal environment of a battery cell 10a from an external environment. The second end cover 52 is a component that covers the opening of the second case 2, to isolate an internal environment of the other battery cell 10a from the external environment. The first end cover 51 and the second end cover 52 may have the same or different structures.

The electrode terminal 53 is a component for achieving electrical connection between the two battery cells 10a. For example, the two battery cells 10a are connected in series through the electrode terminal 53. The terminal body 531 may be of a columnar structure that passes through the first end cover 51 and the second end cover 52.

The acquisition member 54 may be a component for acquiring electrical signals of the battery cells 10a. The acquisition member 54 may be configured to acquire signals such as voltage and current. The acquisition member 54 may be a metal conductor, such as copper, iron, aluminum, steel, or aluminum alloy. The main body portion 541 may be of a sheet-like structure arranged between the first end cover 51 and the second end cover 52. The connecting portion 542 protrudes from the main body portion 541. The connecting portion 542 may extend from the main body portion 541 in a direction away from the second end cover 52. Or, the connecting portion 542 may extend from the main body portion 541 in a direction away from the first end cover 51. The connecting portion 542 and the main body portion 541 may be integrally formed. The connecting portion 542 and the main body portion 541 may also be separately arranged and connected together, for example, by welding. The connecting portion 542 may be of various structures. The connecting portion 542 may be of a plate-shaped structure, an annular structure, and the like that extends in the first direction Z.

The connecting portion 542 may be connected to an outer peripheral surface of the terminal body 531. The outer peripheral surface is an outer surface of the terminal body 531 parallel to an axial direction. The connecting portion 542 and the terminal body 531 may be directly connected to each other, or may be just in contact with each other. The contact is surface contact, or they may be fixedly connected, for example, by welding, based on maintaining the contact. The connecting portion 542 and the terminal body 531 may also be indirectly connected to each other. For example, the connecting portion 542 is bonded to the terminal body 531 through a conductive adhesive layer.

Exemplarily, the end cover assembly 5 may further include a first insulating member 55, a second insulating member 56, and a third insulating member 57. In the first direction Z, the first insulating member 55 is arranged between the first end cover 51 and the second end cover 52. The first insulating member 55 is configured to insulate and isolate the first end cover 51 from the second end cover 52. The second insulating member 56 is arranged on one side of the first end cover 51 facing away from the second end cover 52. The second insulating member 56 is configured to insulate and isolate the first end cover 51 from the first electrode assembly 3. The third insulating member 57 is arranged on one side of the second end cover 52 facing away from the first end cover 51. The third insulating member 57 is configured to insulate and isolate the second end cover 52 from the second electrode assembly 4. The first insulating member 55, the second insulating member 56, and the third insulating member 57 are all made of insulating materials, such as plastic and rubber.

In this embodiment of the present application, the first direction Z is a stacking direction of the first end cover 51 and the second end cover 52, and is also thickness directions of the first end cover 51 and the second end cover 52.

In this embodiment of the present application, the main body portion 541 of the acquisition member 54 is stacked between the first end cover 51 and the second end cover 52, and the connecting portion 542 of the acquisition member 54 extends from the main body portion 541 in the stacking direction of the first end cover 51 and the second end cover 52. The connecting part 542 is connected to the terminal body 531 of the electrode terminal 53, so that stable electrical connection between the acquisition member 54 and the electrode terminal 53 is achieved. The end cover assembly has a simple structure and perfect economy.

In some embodiments, continuing to refer to Fig. 4 and Fig. 5, the acquisition member 54 is provided with a mounting hole 543. The mounting hole 543 penetrates through the main body portion 541 and the connecting portion 542 in the first direction Z. The terminal body 531 is arranged in the mounting hole 543 in a penetrating manner. A hole wall surface of the mounting hole 543 is connected to an outer peripheral surface of the terminal body 531.

The mounting hole 543 may be in various shapes, such as a circular hole and a square hole. The shape of the mounting hole 543 may match a shape of the terminal body 531. For example, if the terminal body 531 is cylindrical, the mounting hole 543 may be a circular hole.

The mounting hole 543 penetrates through the main body portion 541 and the connecting portion 542. It can be understood that a portion of the mounting hole 543 is located in the main body portion 541, and the other portion is located in the connecting portion 542. The mounting hole 543 may be a uniform-diameter hole, a diameter of which does not change in its axial direction. Exemplarily, as shown in Fig. 5, in the first direction Z, the main body portion 541 has a third surface 5411 and a fourth surface 5412 which are opposite to each other. The connecting portion 542 protrudes from the third surface 5411. A first end surface 5421 is formed at one end of the connecting portion 542 facing away from the third surface 5411, and the mounting hole 543 penetrates through the fourth surface 5412 and the first end surface 5421.

The hole wall surface of the mounting hole 543 and the outer peripheral surface of the terminal body 531 can be directly connected. For example, the hole wall surface of the mounting hole 543 is in direct contact with the outer peripheral surface of the terminal body 531. Exemplarily, the hole wall surface of the mounting hole 543 and the outer peripheral surface of the terminal body 531 form an interference fit. The hole wall surface of the mounting hole 543 and the outer peripheral surface of the terminal body 531 may also be indirectly connected. For example, they are connected by a conductive adhesive.

In this embodiment, both the main body portion 541 and the connecting portion 542 are connected to the terminal body 531, which enlarges a connection area between the acquisition member 54 and the electrode terminal 53. On the one hand, the stability of electrical connection between the acquisition member 54 and the electrode terminal 53 is further improved. On the other hand, a current flowing area between the connecting portion 542 and the terminal body 531 can be enlarged, and a current flowing resistance can be reduced.

In some embodiments, referring to Fig. 6, Fig. 6 is a partially enlarged view of the end cover assembly 5 shown in Fig. 4. The first end cover 51 is provided with a first lead-out hole 511, and the terminal body 531 is arranged in the first lead-out hole 511 in a penetrating manner. In the first direction Z, the connecting portion 542 at least partially extends into the first lead-out hole 511.

The first lead-out hole 511 is a through hole penetrating through inner and outer surfaces of the first end cover 51, and the terminal body 531 may be of a columnar structure arranged in the first lead-out hole 511 in the penetrating manner. The connecting portion 542 may completely extend into the first lead-out hole 511, or may partially extend into the first lead-out hole 511.

The second end cover 52 is provided with a second lead-out hole 521, and the terminal body 531 is arranged in the second lead-out hole 521 in a penetrating manner. The second lead-out hole 521 is a through hole penetrating through inner and outer surfaces of the second end cover 52.

In this embodiment, an internal space of the first lead-out hole 511 is fully used, and a space, occupied by the connecting portion 542, between the first end cover 51 and the second end cover 52 is reduced, so that the overall structure of the end cover assembly 5 is more compact. In addition, the acquisition member 54 is connected to the terminal body 531 through the connecting portion 542, and the connecting portion 542 at least partially extends into the first lead-out hole 511, so that the main body portion 541 can be made thinner; a distance between the first end cover 51 and the second end cover 52 can be shortened; a size of the end cover assembly 5 in the stacking direction of the first end cover 51 and the second end cover 52 can be reduced; and it is beneficial to increasing an energy density of a battery 100.

In some embodiments, continuing to refer to Fig. 6, the end cover assembly 5 further includes a first insulating member 55, and the first insulating member 55 includes a first insulating portion 551 and a second insulating portion 552. In the first direction Z, the first insulating portion 551 is at least partially arranged between the first end cover 51 and the main body portion 541, to insulate and isolate the main body portion 541 from the first end cover 51. The second insulating portion 552 is connected to the first insulating portion 551 and at least partially extends into the first lead-out hole 511 in the first direction Z, to insulate and isolate the connecting portion 542 from the first end cover 51.

The first insulating portion 551 achieves an effect of isolating the main body portion 541 from the first end cover 51, to achieve insulation between the main body portion 541 and the first end cover 51. The second insulating portion 552 achieves an effect of isolating the connecting portion 542 from the first end cover 51, to achieve insulation between the connecting portion 542 and the first end cover 51. The first insulating portion 551 and the second insulating portion 552 may be integrally formed.

In this embodiment in which the first insulating member 55 insulates and isolates the first end cover 51 from the second end cover 52, the acquisition member 54 may be embedded in the first insulating member 55. A portion of the first insulating member 55 located between the main body portion 541 and the first end cover 51 may be the first insulating portion 551, and a portion of the first insulating member 55 located between the connecting portion 542 and the first end cover 51 may be the second insulating portion 552.

In this embodiment in which the electrode terminal 53 is arranged in the mounting hole 543 of the acquisition member 54 in the penetrating manner, the second insulating portion 552 may extend into the first lead-out hole 511 in the first direction Z and surround the connecting portion 542, to achieve insulation between the connecting portion 542 and the first end cover 51.

In this embodiment, the main body portion 541 and the first end cover 51 can be insulated by the first insulating portion 551, and the connecting portion 542 and the first end cover 51 can be insulated by the second insulating portion 552. In addition, since both the connecting portion 542 and the second insulating portion 552 extend into the first lead-out hole 511, the first end cover 51 plays a lateral supporting role for the connecting portion 542 through the second insulating portion 552, thereby lowering a risk of lateral deformation of the connecting portion 542. A lateral direction is perpendicular to the first direction Z, and the lateral direction may be a radial direction of the terminal body 531.

In some embodiments, continuing to refer to Fig. 6, the end cover assembly 5 further includes a first sealing member 58. The first sealing member 58 is configured to seal the electrode terminal 53 and the first end cover 51. In the first direction Z, one end of the second insulating portion 552 facing away from the first insulating portion 551 abuts against the first sealing member 58.

The first sealing member 58 is a component for sealing the electrode terminal 53 and the first end cover 51. The first sealing member 58 can lower a risk that electrolyte in the first case 1 flows out through the first lead-out hole 511. The first sealing member 58 may be a sealing ring sleeving an outer side of the terminal body 531. The first sealing member 58 may be partially located in the first lead-out hole 511, or may be completely located in the first lead-out hole 511. The first sealing member 58 is made of an insulating material, such as rubber.

The end of the second insulating portion 552 facing away from the first insulating portion 551 can be located in the first lead-out hole 511, to abut against a portion of the first sealing member 58 located inside the first lead-out hole 511. The end of the second insulating portion 552 facing away from the first insulating portion 551 may also be located outside the first lead-out hole 511, to abut against a portion of the first sealing member 58 located outside the first lead-out hole 511.

Since the second insulating portion 552 facing away from the first insulating portion 551 abuts against the first sealing member 58, a gap between the second insulating portion 552 and the first sealing member 58 is eliminated, thereby lower a risk of overlapping between the connecting portion 542 and the first end cover 51 due to the gap between the second insulating portion 552 and the first sealing member 58.

In some embodiments, continuing to refer to Fig. 6, the end cover assembly 5 may further include a second sealing member 59. The second sealing member 59 is configured to seal the electrode terminal 53 and the second end cover 52.

The second sealing member 59 is a component for sealing the electrode terminal 53 and the second end cover 52. The second sealing member 59 can lower a risk that electrolyte in the second case 2 flows out through the second lead-out hole 521. The second sealing member 59 may be a sealing ring sleeving an outer side of the terminal body 531. The second sealing member 59 may be partially located in the second lead-out hole 521, or may be completely located in the second lead-out hole 521. The second sealing member 59 is made of an insulating material, such as rubber.

In some embodiments, continuing to refer to FIG. 6, in the first direction Z, one end of the connecting portion 542 facing away from the main body portion 541 abuts against the first sealing member 58.

The end of the connecting portion 542 facing away from the main body portion 541 can be located in the first lead-out hole 511, to abut against a portion of the first sealing member 58 located inside the first lead-out hole 511. The end of the connecting portion 542 facing away from the main body portion 541 may also be located outside the first lead-out hole 511, to abut against a portion of the first sealing member 58 located outside the first lead-out hole 511. The end of the connecting portion 542 facing away from the main body portion 541 and the end of the second insulating portion 552 facing away from the first insulating portion 551 may abut against the same plane of the first sealing member 58, or may respectively abut against two planes spaced apart by a distance.

In this embodiment, since the end of the connecting portion 542 facing away from the main body portion 541 abuts against the first sealing member 58, this structure can further lower the risk of overlapping between the connecting portion 542 and the first end cover 51.

In some embodiments, referring to Fig. 6 and Fig. 7, Fig. 7 is a schematic structural diagram of the first sealing member 58 shown in Fig. 6. The electrode terminal 53 further includes a first position-limiting portion 532, and the first position-limiting portion 532 is connected to the terminal body 531. The first sealing member 58 includes a first sealing portion 581 and a second sealing portion 582. The second sealing portion 582 is connected to the first sealing portion 581. In the first direction Z, the first sealing portion 581 at least partially extends into the first lead-out hole 511. The end of the second insulating portion 552 facing away from the first insulating portion 551 and the end of the connecting portion 542 facing away from the main body portion 541 both abut against the first sealing portion 581. The first position-limiting portion 532 is located on one side of the first end cover 51 facing away from the second end cover 52. The second sealing portion 582 is at least partially arranged between the first end cover 51 and the first position-limiting portion 532.

The first position-limiting portion 532 is connected to the terminal body 531 to form an inverted T-shaped structure. The first position-limiting portion 532 plays a limiting role, to prevent the electrode terminal 53 from moving in a direction from the first end cover 51 to the second end cover 52 relative to the first end cover 51 and the second end cover 52. The first position-limiting portion 532 may be a circular plate-shaped structure coaxial with the terminal body 531, and a diameter of the first position-limiting portion 532 is greater than a diameter of the terminal body 531.

The first sealing portion 581 and the second sealing portion 582 may both be of annular structures and coaxial with each other, and the first sealing portion 581 and the second sealing portion 582 may be integrally formed. The second sealing portion 582 may be pressed between the first end cover 51 and the first position-limiting portion 532, to achieve sealing between the first position-limiting portion 532 and the first end cover 51. The first sealing portion 581 extends into the first lead-out hole 511, and an inner peripheral surface of the first sealing portion 581 may or may not be in contact with the outer peripheral surface of the terminal body 531, and the outer peripheral surface of the first sealing portion 581 may or may not be in contact with the hole wall surface of the first lead-out hole 511. If the inner peripheral surface of the first sealing portion 581 is in contact with the outer peripheral surface of the terminal body 531, and the outer peripheral surface of the first sealing portion 581 is in contact with the hole wall surface of the first lead-out hole 511, the first sealing portion 581 can be pressed between the outer peripheral surface of the terminal body 531 and the hole wall surface of the first lead-out hole 511. The first sealing portion 581 also plays a sealing role.

In this embodiment, the first position-limiting portion 532 and the first end cover 51 are sealed by the second sealing portion 582, and the first sealing portion 581 extends into the first lead-out hole 511 to abut against the first insulating portion 551 and the connecting portion 542, to lower the risk of overlapping between the connecting portion 542 and the first end cover 51. In addition, the first sealing portion 581 can extend into the first lead-out hole 511 to achieve positioning, and rapid mounting of the first sealing member 58 can be achieved.

In some embodiments, in the first direction Z, the first sealing member 58 has a first face 583 facing the main body portion 541, and the end of the second insulating portion 552 facing away from the first insulating portion 551 and the end of the connecting portion 542 facing away from the main body portion 541 both abut against the first face 583.

Exemplarily, as shown in Fig. 7, the first face 583 is an end surface of the first sealing portion 581 facing away from the second sealing portion 582 in the first direction Z.

In this embodiment, the second insulating portion 552 and the connecting portion 542 abut against the same surface of the first sealing member 58, which can simplify the structure of the first sealing member 58.

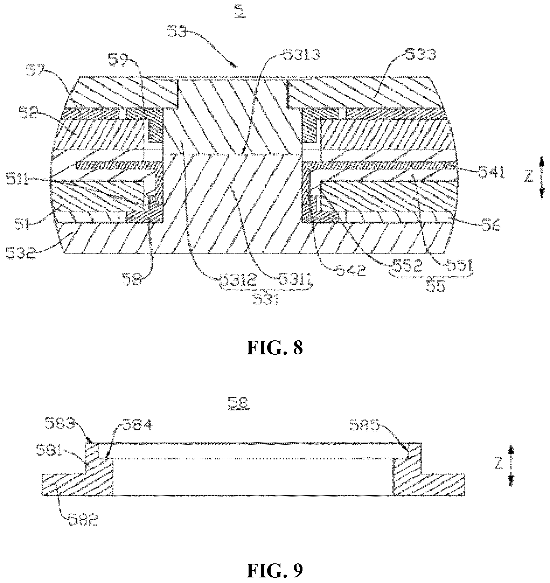

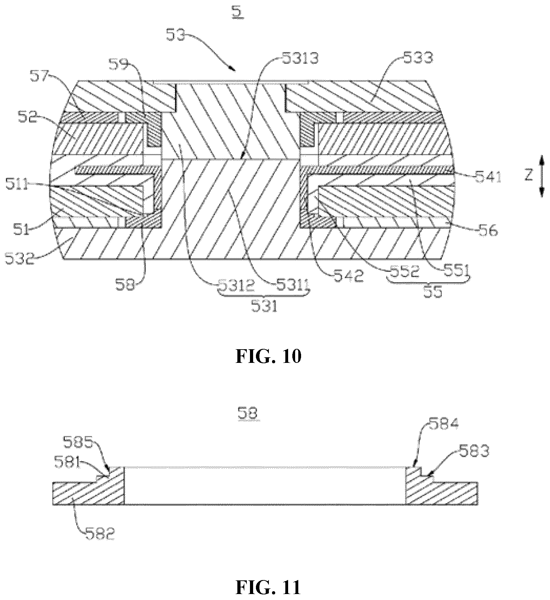

In some embodiments, referring to Fig. 8 to Fig. 11, Fig. 8 is a partially enlarged view of an end cover assembly 5 according to some other embodiments of the present application. Fig. 9 is a schematic structural diagram of a first sealing member 58 shown in Fig. 8. Fig. 10 is a partially enlarged view of an end cover assembly 5 according to still some embodiments of the present application. Fig. 11 is a schematic structural diagram of a first sealing member 58 shown in Fig. 10. In the first direction Z, the first sealing member 58 has a first face 583 facing the main body portion 541 and a second face 584 facing the main body portion 541. The end of the second insulating portion 552 facing away from the first insulating portion 551 abuts against the first face 583; and the end of the connecting portion 542 facing away from the main body portion 541 abuts against the second face 584. The first face 583 is closer to the second end cover 52 than the second face 584, or the second face 584 is closer to the second end cover 52 than the first face 583.

The first face 583 and the second face 584 are two surfaces of the first sealing member 58 that are spaced apart from each other by a distance in the first direction Z. Both the first face 583 and the second face 584 may be annular planes. Exemplarily, in Fig. 8 and Fig. 9, the first face 583 is an end surface of the first sealing portion 581 facing away from the second sealing portion 582 in the first direction Z. In Fig. 10 and Fig. 11, the second face 584 is an end surface of the first sealing portion 581 facing away from the second sealing portion 582 in the first direction Z.

An inner edge of the first face 583 and an outer edge of the second face 584 are connected through a cylindrical surface 585. In Fig. 8, the cylindrical surface 585 may be fitted to an outer peripheral surface of the connecting portion 542, and the cylindrical surface 585 may prevent burrs on the connecting portion 542 from overlapping the first end cover 51. In Fig. 10, the first sealing portion 581 of the first sealing member 58 may be fitted with an inner peripheral surface of the second insulating portion 552, and the second insulating portion 552 can isolate the burrs on the connecting portion 542 from overlapping the first end cover 51.

After the connecting portion 542 is formed, burrs may be formed on the end of the connecting portion 542 facing away from the insulating member in the first direction Z. There is a risk that the burrs overlap the first end cover 51. Since the second insulating portion 552 and the connecting portion 542 respectively abut against the first face 583 and the second face 584 which are spaced apart by a distance, abutting positions of the second insulating portion 552 and the first face 583 and abutting positions of the connecting portion 542 and the second face 584 are misaligned, which can prevent the burrs on the connecting portion 542 from overlapping the first end cover 51 and lower a risk of short circuit.

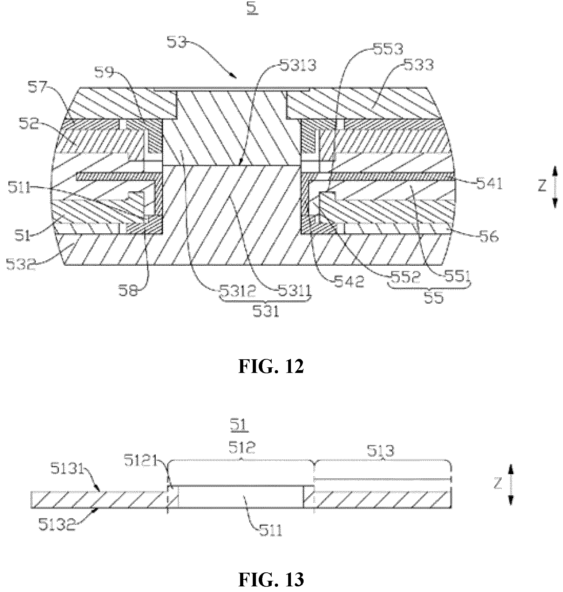

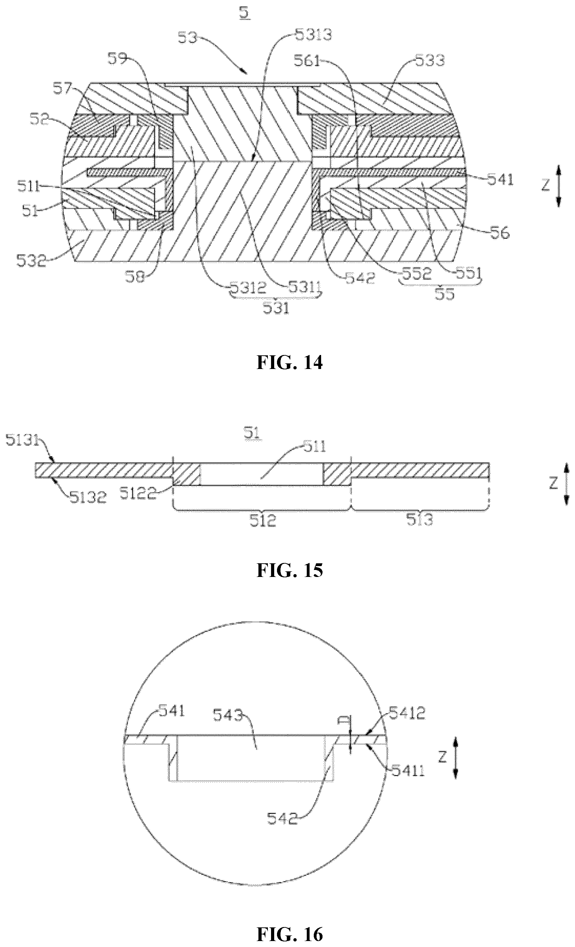

In some embodiments, referring to Fig. 12 to Fig. 15, Fig. 12 is a partially enlarged view of an end cover assembly 5 according to yet still some embodiments of the present application. Fig. 13 is a schematic structural diagram of a first end cover 51 shown in Fig. 12. Fig. 14 is a partially enlarged view of an end cover assembly 5 according to other embodiments of the present application. Fig. 15 is a schematic structural diagram of a first end cover 51 shown in Fig. 14. The first end cover 51 includes a first region 512 and a second region 513. The second region 513 is arranged around the first region 512. In the first direction Z, the thickness of the second region 513 is less than the thickness of the first region 512. The first lead-out hole 511 is provided in the first region 512.

The first region 512 is a thicker portion of the first end cover 51, and the second region 513 is a thinner portion of the first end cover 51. the thickness of the first region 512 is a size of the first region 512 in the first direction Z, and the thickness of the second region 513 is a size of the second region 513 in the first direction Z.

The first region 512 has a portion extending beyond a surface of the first end cover 51 in the first direction Z. The first region 512 may extend beyond a surface of the first end cover 51 facing the second end cover 52, may extend beyond a surface of the first end cover 51 facing away from the second end cover 52, or may extend beyond the two surfaces of the first end cover 51 facing away from and facing the second end cover 52.

In this embodiment, the first lead-out hole 511 is arranged in the first region 512 with a larger thickness, so that a depth of the first lead-out hole 511 is ensured, to accommodate more parts of the connecting portion 542. The thickness of the second region 513 is less than the thickness of the first region 512. The second region 513 is a thinned region of the first end cover 51, which reduces a weight of the first end cover 51 and can effectively reduce the production costs.

In some embodiments, referring to Fig. 12 and Fig. 13, in the first direction Z, the second region 513 has a first surface 5131 facing the second end cover 52, and the first region 512 partially protrudes from the first surface 5131 in a direction facing the second end cover 52.

Exemplarily, in the first direction Z, the second region 513 has a second surface 5132 facing away from the second end cover 52, and a distance between the second surface 5132 and the first surface 5131 is the thickness of the second region 513. A surface of the first region 512 facing the second end cover 52 is closer to the second end cover 52 than the first surface 5131, and a surface of the first region 512 facing away from the second end cover 52 is flush with the second surface 5132.

In this embodiment, the first region 512 partially protrudes from the first surface 5131 in the direction facing the second end cover 52, thereby enlarging the lateral supporting area of the first region 512 for the connecting portion 542 and lowering the risk of lateral deformation of the connecting portion 542 after connection to the electrode terminal 53.

In some embodiments, continuing to refer to Fig. 12 and Fig. 13, the first region 512 includes a first protrusion 5121 protruding from the first surface 5131 in the direction facing the second end cover 52. The end cover assembly 5 further includes a first insulating member 55. In the first direction Z, the first insulating member 55 is at least partially arranged between the first end cover 51 and the main body portion 541, to insulate and isolate the main body portion 541 from the first end cover 51. The first insulating member 55 is provided with a first avoidance portion 553 for avoiding the first protrusion 5121.

The first protrusion 5121 is a portion of the first region 512 protruding from the first surface 5131. The first protrusion 5121 may be an annular boss arranged around the first lead-out hole 511. The first avoidance portion 553 is configured to avoid the first protrusion 5121, and the first avoidance portion 553 may be an avoidance slot provided in the first insulating member 55.

In this embodiment in which first insulating portion 551 of the first insulating member 55 extends into the first lead-out hole 511, and the second insulating portion 552 of the first insulating member 55 is at least partially arranged between the first end cover 51 and the first position-limiting portion 532 to play the insulating role, the first avoidance portion 553 is arranged at the second insulating portion 552.

The first end cover 51 and the acquisition member 54 can be insulated by the first insulating member 55, and the first avoidance portion 553 on the first insulating member 55 can avoid the first protrusion 5121, so that the first insulating member 55 can tightly abut against the second region 513, making the overall structure of the end cover assembly 5 more compact.

In some embodiments, referring to Fig. 14 and Fig. 15, in the first direction Z, the second region 513 has a second surface 5132 facing away from the second end cover 52, and the first region 512 partially protrudes from the second surface 5132 in a direction facing away from the second end cover 52.

Exemplarily, in the first direction Z, the second region 513 has a first surface 5131 facing the second end cover 52. The surface of the first region 512 facing the second end cover 52 is flush with the first surface 5131, and the surface of the first region 512 facing away from the second end cover 52 is farther away from the second end cover 52 than the second surface 5132.

In some embodiments, continuing to refer to Fig. 14 and Fig. 15, the first region 512 includes a second protrusion 5122 protruding from the second surface 5132 in the direction facing away from the second end cover 52. The end cover assembly 5 further includes a second insulating member 56. The electrode terminal 53 further includes a first position-limiting portion 532, and the first position-limiting portion 532 is connected to the terminal body 531. In the first direction Z, the first position-limiting portion 532 is located on the side of the first end cover 51 facing away from the second end cover 52, and the second insulating member 56 is at least partially arranged between the first end cover 51 and the first position-limiting portion 532, to insulate and isolate the first end cover 51 from the first position-limiting portion 532. The second insulating member 56 is provided with a second avoidance portion 561 for avoiding the second protrusion 5122.

The second protrusion 5122 is a portion of the first region 512 protruding from the first surface 5132. The second protrusion 5122 may be an annular boss arranged around the first lead-out hole 511. The second avoidance portion 561 is configured to avoid a boss, and the second avoidance portion 561 may be an avoidance slot provided in the second insulating member 56.

In this embodiment in which the first position-limiting portion 532 and the end cover are sealed by the first sealing member 58, the second sealing portion 582 of the first sealing member 58 is partially arranged between a second boss and the first position-limiting portion 532, to seal the first end cover 51 and the first position-limiting portion 532.

The first end cover 51 and the first position-limiting portion 532 can be insulated by the second insulating member 56, and the second avoidance portion 561 on the second insulating member 56 can avoid the second protrusion 5122, so that the second insulating member 56 can tightly abut against the second region 513, making the overall structure of the end cover assembly 5 more compact.

In some embodiments, referring to Fig. 6, Fig. 8, Fig. 10, Fig. 12, and Fig. 14, the end cover assembly 5 further includes a first insulating member 55. In the first direction Z, the first insulating member 55 is at least partially arranged between the first end cover 51 and the second end cover 52, to insulate and isolate the first end cover 51 from the second end cover 52. The acquisition member 54 is embedded into the first insulating member 55.

The first insulating member 55 is made of an insulating material. The first insulating member 55 plays a role of isolating the first end cover 51 from the second end cover 52. In this embodiment in which the connecting portion 542 at least partially extends into the first lead-out hole 511, a portion of the first insulating member 55 is located between the first end cover 51 and the main body portion 541, to achieve insulation between the first end cover 51 and the main body portion 541. A portion of the first insulating member 55 is located between the second end cover 52 and the main body portion 541, to achieve insulation between the second end cover 52 and the main body portion 541. A portion of the first insulating member 55 extends into the first lead-out hole 511 and is located between the connecting portion 542 and the first end cover 51, to achieve insulation between the connecting portion 542 and the first end cover 51.

In this embodiment, the first end cover 51 and the second end cover 52 can be insulated by the first insulating member 55, and the acquisition member 54 is embedded in the first insulating member 55. On the one hand, the first insulating member 55 can protect the acquisition member 54 and achieve insulation between the acquisition member 54 and the first end cover 51, as well as between the acquisition member 54 and the second end cover 52. On the other hand, a distance between the first end cover 51 and the second end cover 52 can be shortened, making the overall structure of the end cover assembly 5 more compact.

In some embodiments, the electrode terminal 53 further includes a first position-limiting portion 532 and a second position-limiting portion 533. The first position-limiting portion 532 and the second position-limiting portion 533 are both connected to the terminal body 531. In the first direction Z, the first position-limiting portion 532 is located on the side of the first end cover 51 facing away from the second end cover 52, and the second position-limiting portion 533 is located on the side of the second end cover 52 facing away from the first end cover 51; and the first position-limiting portion 532 and the second position-limiting portion 533 are configured to cooperate to limit the first end cover 51 and the second end cover 52.

The first position-limiting portion 532 is connected to the terminal body 531 to form an inverted T-shaped structure, and the second position-limiting portion 533 is connected to the body 531 to form a T-shaped structure. The first position-limiting portion 532 and the second position-limiting portion 533 both play limiting roles, to prevent the electrode terminal 53 from moving in the first direction Z relative to the first end cover 51 and the second end cover 52. The first position-limiting portion 532 and the second position-limiting portion 533 may both be circular plate-shaped structures coaxial with the terminal body 531, and a diameter of the first position-limiting portion 532 and a diameter of the second position-limiting portion 533 are both greater than a diameter of the terminal body 531.

The terminal body 531 may include a first section 5311 and a second section 5312 which are made of different materials. The first section 5311 and the second section 5312 are coaxially arranged. The first section 5311 is connected to the first position-limiting portion 532, and the second section 5312 is connected to the second position-limiting portion 533. In the first direction Z, one end of the first section 5311 away from the first position-limiting portion 532 is connected to one end of the second section 5312 away from the second position-limiting portion 533, and a composite interface 5313 is formed at a connecting position. The first section 5311 and the first position-limiting portion 532 can be integrally formed or welded, the second section 5312 and the second position-limiting portion 533 can be integrally formed or welded. The first section 5311 and the second section 5312 can be connected together by friction welding. Exemplarily, the first section 5311 and the first position-limiting portion 532 are integrally formed, and the second section 5312 and the second position-limiting portion 533 are in plugging fit and welded. The first position-limiting portion 532 and the first section 5311 are made of copper materials, and the second position-limiting portion 533 and the second section 5312 are made of aluminum materials.

It should be noted that in this embodiment in which the terminal body 531 is arranged around the mounting hole 543 of the acquisition member 54, the composite interface 5313 can be located in the mounting hole 543, and the acquisition member 54 can play a role in protecting and strengthening the connecting positions of the first section 5311 and the second section 5312. Of course, in other embodiments, the composite interface 5313 may also be located outside the mounting hole 543.

In this embodiment, the first end cover 51 and the second end cover 52 are limited between the first position-limiting portion 532 and the second position-limiting portion 533, so that the electrode terminal 53 is mounted with the first end cover 51 and the second end cover 52, and the electrode terminal 53, the first end cover 51, and the second end cover 52 have a better integrity.

In some embodiments, the end cover assembly 5 further includes a second insulating member 56. In the first direction Z, the second insulating member 56 is at least partially arranged between the first end cover 51 and the first position-limiting portion 532, to insulate and isolate the first end cover 51 from the first position-limiting portion 532.

Exemplarily, the second insulating member 56 is entirely arranged on the side of the first end cover 51 facing away from the second end cover 52, and the second insulating member 56 is partially arranged between the first end cover 51 and the first position-limiting portion 532. In the first direction Z, the second insulating member 56 covers a portion, not covered by the first position-limiting portion 532, of the surface of the first end cover 51 facing away from the second end cover 52. In this way, the second insulating member 56 not only achieves insulation between the first end cover 51 and the first position-limiting portion 532, but also achieves insulation between the first end cover 51 and the first electrode assembly 3.

In some embodiments, the end cover further includes a third insulating member 57. In the second direction, the third insulating portion 57 is at least partially arranged between the second end cover 52 and the second position-limiting portion 533, to insulate and isolate the second end cover 52 from the second position-limiting portion 533. The second end cover 52 and the second position-limiting portion 533 can be insulated by the third insulating member 57.

Exemplarily, the third insulating member 57 is entirely arranged on the side of the second end cover 52 facing away from the first end cover 51, and the third insulating member 57 is partially arranged between the second end cover 52 and the second position-limiting portion 533. In the first direction Z, the third insulating member 57 covers a portion, not covered by the second position-limiting portion 533, of a surface of the second end cover 52 facing away from the first end cover 51. In this way, the third insulating member 57 not only achieves insulation between the second end cover 52 and the second position-limiting portion 533, but also achieves insulation between the second end cover 52 and the second electrode assembly 4.

In some embodiments, referring to Fig. 16, Fig. 16 is a partially enlarged view of part of the acquisition member 54 shown in Fig. 5. the thickness of the main body portion 541 is D, which satisfies: 0.1 mm≤D≤1.5 mm.

D may be any value between 0.1 and 0.5 mm, such as 0.1 mm, 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, and 1.5 mm.

The thickness of the main body portion 541 is a distance between the third surface 5411 and the fourth surface 5412 in the first direction Z.

The thickness of the main body portion 541 is set within a reasonable range, so that the overall thickness of the connecting portion 542 is reduced, which shortens the distance between the first end cover 51 and the second end cover 52, and makes the overall structure of the end cover assembly 5 more compact.

In some embodiments, the connecting portion 542 and the main body portion 541 are integrally formed.

The connecting portion 542 and the main body portion 541 may be integrally formed by stamping, casting, or the like.

In this embodiment, the connecting portion 542 and the main body portion 541 are integrally formed, so that it ensures the connection strength of the connecting portion 542 and the main body portion 541, and stable current flowing between the connecting portion 542 and the main body portion 541 is achieved.

The embodiments of the present application provide a battery pack 10, including a first case 1, a second case 2, and the above end cover assembly 5 provided in any one of the embodiments in the first aspect. The first case 1 is configured to accommodate the first electrode assembly 3. The second case 2 is configured to accommodate the second electrode assembly 4. The first end cover 51 closes an opening of the first case 1. The second end cover 52 closes an opening of the second case 2. The electrode terminal 53 is configured to achieve electrical connection between the first electrode assembly 3 and the second electrode assembly 4.

The embodiments of the present application provide a battery 100, including the above battery pack 10 provided in any one of the embodiments.

The embodiments of the present application provide an electrical device, including the above battery 100 provided in any one of the embodiments.

In addition, referring to Fig. 4 to Fig. 6, the embodiments of the present application provide an end cover assembly 5, including a first end cover 51, a second end cover 52, an electrode terminal 53, an acquisition member 54, a first insulating member 55, a second insulating member 56, and a third insulating member 57. The second insulating member 56, the first end cover 51, the first insulating member 55, the second end cover 52, and the third insulating member 57 are stacked in a first direction Z. In the first direction Z, the first insulating member 55 is arranged between the first end cover 51 and the second end cover 52; the second insulating member 56 is arranged on one side of the first end cover 51 facing away from the second end cover 52; and the third insulating member 57 is arranged on one side of the second end cover 52 facing away from the first end cover 51. The acquisition member 54 is embedded in the first insulating member 55, so that the acquisition member 54 is located between the first end cover 51 and the second end cover 52. The electrode terminal 53 includes a terminal body 531, a first position-limiting portion 532, and a second position-limiting portion 533. The first position-limiting portion 532 and the second position-limiting portion 533 are connected to the terminal body 531. In the first direction Z, the first position-limiting portion 532 is located on the side of the first end cover 51 facing away from the second end cover 52, and the second position-limiting portion 533 is located on the side of the second end cover 52 facing away from the first end cover 51. The terminal body 531 passes through the second insulating member 56, the first end cover 51, the first insulating member 55, the second end cover 52, and the third insulating member 57 in sequence. The first position-limiting portion 532 and the second position-limiting portion 533 cooperate to limit the second insulating member 56, the first end cover 51, the first insulating member 55, the second end cover 52, and the third insulating member 57. The first end cover 51 is provided with a first lead-out hole 511, and the terminal body 531 is arranged in the first lead-out hole 511 in a penetrating manner. The acquisition member 54 includes a main body portion 541 and a connecting portion 542. In the first direction Z, the main body portion 541 is located between the first end cover 51 and the second end cover 52. The connecting portion 542 is connected to the main body portion 541 and extends from the main body portion 541 into the first lead-out hole 511 in the first direction Z. The acquisition member 54 is provided with a mounting hole 543. The mounting hole 543 penetrates through the main body portion 541 and the connecting portion 542 in the first direction Z. The terminal body 531 is arranged in the mounting hole 543 in a penetrating manner. A hole wall surface of the mounting hole 543 is connected to an outer peripheral surface of the terminal body 531.

It should be noted that the embodiments in the present application and features in the embodiments may be mutually combined without conflicts.

The above embodiments are only used for illustrating the technical solutions of the present application, and are not intended to limit the present application. For those skilled in the art, the present application may have various modifications and changes. Any modifications, equivalent substitutions, improvements, etc. made within the spirit and principles of the present application shall fall into the scope of protection of the present application.

## Claims

1. An end cover assembly, comprising:
a first end cover, configured to close an opening of a first case;
a second end cover, configured to close an opening of a second case;
an electrode terminal, comprising a terminal body that passes through the first end cover and the second end cover; and
an acquisition member, comprising a main body portion and a connecting portion, wherein in a first direction, the main body portion is stacked between the first end cover and the second end cover; the connecting portion is connected to the main body portion and extends from the main body portion in the first direction; and the connecting portion is connected to the terminal body to achieve electrical connection between the acquisition member and the electrode terminal.

2. The end cover assembly according to claim 1, wherein the acquisition member is provided with a mounting hole; the mounting hole penetrates through the main body portion and the connecting portion in the first direction; the terminal body is arranged in the mounting hole in a penetrating manner; and a hole wall surface of the mounting hole is connected to an outer peripheral surface of the terminal body.

3. The end cover assembly according to claim 1 or 2, wherein the first end cover is provided with a first lead-out hole, and the terminal body is arranged in the first lead-out hole in a penetrating manner;
wherein in the first direction, the connecting portion at least partially extends into the first lead-out hole.

4. The end cover assembly according to claim 3, wherein the end cover assembly further comprises a first insulating member; the first insulating member comprises a first insulating portion and a second insulating portion;
in the first direction, the first insulating portion is at least partially arranged between the first end cover and the main body portion, to insulate and isolate the main body portion from the first end cover; and
the second insulating portion is connected to the first insulating portion and at least partially extends into the first lead-out hole in the first direction, to insulate and isolate the connecting portion from the first end cover.

5. The end cover assembly according to claim 4, wherein the end cover assembly further comprises a first sealing member; the first sealing member is configured to seal the electrode terminal and the first end cover; and
in the first direction, one end of the second insulating portion facing away from the first insulating portion abuts against the first sealing member.

6. The end cover assembly according to claim 5, wherein in the first direction, one end of the connecting portion facing away from the main body portion abuts against the first sealing member.

7. The end cover assembly according to claim 5 or 6, wherein the electrode terminal further comprises a first position-limiting portion, and the first position-limiting portion is connected to the terminal body;
the first sealing member comprises a first sealing portion and a second sealing portion; the second sealing portion is connected to the first sealing portion;
in the first direction, the first sealing portion at least partially extends into the first lead-out hole; the end of the second insulating portion facing away from the first insulating portion and the end of the connecting portion facing away from the main body portion both abut against the first sealing portion; the first position-limiting portion is located on one side of the first end cover facing away from the second end cover; and the second sealing portion is at least partially arranged between the first end cover and the first position-limiting portion.

8. The end cover assembly according to any one of claims 5 to 7, wherein in the first direction, the first sealing member has a first face facing the main body portion, and the end of the second insulating portion facing away from the first insulating portion and the end of the connecting portion facing away from the main body portion both abut against the first face.

9. The end cover assembly according to any one of claims 5 to 7, wherein in the first direction, the first sealing member has a first face facing the main body portion and a second face facing the main body portion; the end of the second insulating portion facing away from the first insulating portion abuts against the first face; and the end of the connecting portion facing away from the main body portion abuts against the second face;
wherein the first face is closer to the second end cover than the second face; or the second face is closer to the second end cover than the first face.

10. The end cover assembly according to any one of claims 3 to 9, wherein the first end cover comprises a first region and a second region; the second region is arranged around the first region;
in the first direction, the thickness of the second region is less than the thickness of the first region; and the first lead-out hole is provided in the first region.

11. The end cover assembly according to claim 10, wherein in the first direction, the second region has a first surface facing the second end cover, and the first region partially protrudes from the first surface in a direction facing the second end cover.

12. The end cover assembly according to claim 11, wherein the first region comprises a first protrusion protruding from the first surface in the direction facing the second end cover;
the end cover assembly further comprises a first insulating member; in the first direction, the first insulating member is at least partially arranged between the first end cover and the main body portion, to insulate and isolate the main body portion from the first end cover; and
wherein the first insulating member is provided with a first avoidance portion for avoiding the first protrusion.

13. The end cover assembly according to any one of claims 10 to 12, wherein in the first direction, the second region has a second surface facing away from the second end cover, and the first region partially protrudes from the second surface in a direction facing away from the second end cover.

14. The end cover assembly according to claim 13, wherein the first region comprises a second protrusion protruding from the second surface in the direction facing away from the second end cover;
the end cover assembly further comprises a second insulating member; the electrode terminal further comprises a first position-limiting portion; the first position-limiting portion is connected to the terminal body; in the first direction, the first position-limiting portion is located on the side of the first end cover facing away from the second end cover; the second insulating member is at least partially arranged between the first end cover and the first position-limiting portion, to insulate and isolate the first end cover from the first position-limiting portion; and
wherein the second insulating member is provided with a second avoidance portion for avoiding the second protrusion.

15. The end cover assembly according to any one of claims 1 to 14, wherein the end cover assembly further comprises a first insulating member; in the first direction, the first insulating member is at least partially arranged between the first end cover and the second end cover, to insulate and isolate the first end cover from the second end cover; and
wherein the acquisition member is embedded into the first insulating member.

16. The end cover assembly according to any one of claims 1 to 15, wherein the electrode terminal further comprises a first position-limiting portion and a second position-limiting portion; the first position-limiting portion and the second position-limiting portion are both connected to the terminal body;
in the first direction, the first position-limiting portion is located on the side of the first end cover facing away from the second end cover, and the second position-limiting portion is located on one side of the second end cover facing away from the first end cover; and the first position-limiting portion and the second position-limiting portion are configured to cooperate to limit the first end cover and the second end cover.

17. The end cover assembly according to claim 16, wherein the end cover assembly further comprises a second insulating member; and
in the first direction, the second insulating portion is at least partially arranged between the first end cover and the first position-limiting portion, to insulate and isolate the first end cover from the first position-limiting portion.

18. The end cover assembly according to claim 16 or 17, wherein the end cover further comprises a third insulating member; and
in the first direction, the third insulating portion is at least partially arranged between the second end cover and the second position-limiting portion, to insulate and isolate the second end cover from the second position-limiting portion.

19. The end cover assembly according to any one of claims 1 to 18, wherein the thickness of the main body portion is D, satisfying: 0.1 mm ≤ D ≤ 1.5 mm.

20. The end cover assembly according to any one of claims 1 to 19, wherein the connecting portion is integrally formed with the main body portion.

21. A battery pack, comprising:
a first case, configured to accommodate a first electrode assembly;
a second case, configured to accommodate a second electrode assembly; and
the end cover assembly according to any one of claims 1 to 20, wherein the first end cover closes an opening of the first case; the second end cover closes an opening of the second case; and the electrode terminal is configured to achieve electrical connection between the first electrode assembly and the second electrode assembly.

22. A battery, comprising:
the battery pack according to claim 21.

23. An electrical device, comprising the battery according to claim 22.
